# EUROPEAN PATENT APPLICATION

(11) **EP 4 814 801 A1**
(43) Date of publication of application: **30.09.2026**
(21) Application number: 26164195.5
(22) Date of filing: 12.03.2026
(51) Int. Cl.: G06N 3/063, G06N 3/0442, G06N 3/0495

(54) **STREAMING DATAFLOW BASED RECURRENT NEURAL NETWORK ACCELERATOR**

(30) Priority: 24.03.2025 US 202519088308
(71) Applicant: STMicroelectronics International N.V., 1228 Plan-les-Ouates, Geneva (CH)
(72) Inventor: MASSA, Riccardo, 20900 MONZA (MONZA-BRIANZA) (IT); BOESCH, Thomas, 6821 ROVIO (CH); SINGH, Surinder Pal, 201301 NOIDA (UTTAR PRADESH) (IN)
(74) Representative: Cabinet Beaumont

(57) **Abstract**

A hardware accelerator system processes recurrent neural networks (RNNs) on edge devices using a streaming architecture that minimizes memory bottlenecks. The system used a matrix multiplication unit for matrix multiplications with an LSTM/GRU accelerator for scalar and gate computations. The matrix multiplication unit processes interleaved weight matrices to compute multiple gate operations in a single pass, while the accelerator includes specialized processing units for arithmetic, activation functions, and recurrent operations. A switching matrix transmits data between components to maintain continuous dataflow. The system supports various RNN architectures including Long Short-Term Memory (LSTM), Gated Recurrent Unit (GRU), and minimal GRU (minGRU) variants through configurable datapaths.

## Description

### TECHNICAL FIELD

This disclosure relates to hardware acceleration of recurrent neural networks (RNNs) and, more particularly, to a streaming dataflow-based accelerator architecture that implements various RNN variants including Long Short-Term Memory (LSTM) and Gated Recurrent Unit (GRU) neural networks as well as other RNN structures such as minimal GRU (minGRU) through matrix interleaving and optimized scalar operations.

### BACKGROUND

Recurrent Neural Networks (RNNs) are a neural network architecture that processes data sequences by maintaining an internal memory of previous inputs, making them particularly useful for analyzing data such as audio signals. Long Short-Term Memory (LSTM) networks, a type of RNN, provide for this capability by incorporating memory cells that can selectively retain or forget information over long sequences, making them particularly useful for processing continuous audio streams where patterns may extend across long time intervals.

In greater detail, an LSTM unit comprises a cell, an input gate, an output gate, and a forget gate. The cell remembers values over arbitrary time intervals, and the gates regulate the flow of information into and out of the cell. The forget gates decide what information to discard from the previous state, by mapping the previous state and the current input to a value between 0 and 1. A (rounded) value of 1 indicates retention of the information, and a value of 0 indicates discarding. The input gates determine which pieces of new information to store in the current cell state, similarly to the forget gates. The output gates control which pieces of information in the current cell state to output, by assigning a value from 0 to 1 to the information, taking into account the previous and current states. Selectively outputting relevant information from the current state allows the LSTM network to maintain useful, long-term dependencies to make predictions, both in current and future time-steps.

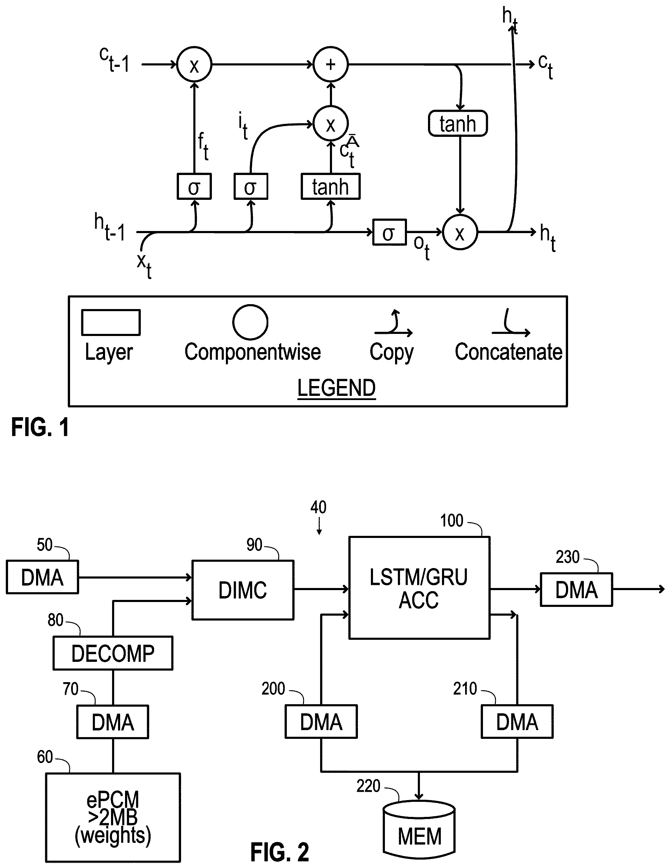

Referring to FIG. 1, a known LSTM memory architecture is described. Each LSTM cell receives the current input xₜ and previous hidden state hₜ₋₁, along with the previous cell state cₜ₋₁. In the diagram, three sigmoid layers σ represent the forget gate fₜ, input gate it , and output gate ot. The forget gate fₜ evaluates the previous cell state cₜ₋₁ to determine which information to discard. In addition, the input gate it works with a candidate cell state *c̃ₜ,* calculated by applying a hyperbolic tangent function (tanh) to [xₜ,hₜ₋₁] in order to determine which new information to store. These two results are added to form the new cell state ct. After applying a tanh activation to the new cell state cₜ, the output gate oₜ selectively exposes relevant parts of this activated cell state to produce the updated hidden state ht. These gating operations are performed in a componentwise manner (as indicated by the "×" and "+" nodes in FIG. 1), so that the most relevant elements of the cell state are carried forward while unnecessary information (e.g., outdated information) is discarded. Through this regulation of the flow of information, the LSTM architecture thus captures and maintains long-term dependencies, facilitating analysis of extended sequences such as audio streams.

The increasing demand for local processing of audio and other sequential data has driven artificial intelligence applications toward edge computing (e.g., where processing occurs on local devices like smartphones, home assistants, or IoT sensors rather than in cloud data centers). These edge devices are considered to be resource-constrained because they have limited processing power, memory, and energy capacity as compared to cloud servers. Despite these limitations, edge devices often need to process continuous streams of real-time data, such as an audio input stream that arrives sample by sample over time, requiring immediate processing without the ability to store and batch process large segments of data.

Prior approaches to enabling LSTM and RNN processing on edge computing devices provides basic capabilities for neural network acceleration, yet suffer from two known limitations. First, they lack streaming data support - they are designed for batch processing where all input data is available at once, rather than optimized for processing continuous, sample-by-sample input streams such as a real-time audio input stream. Second, they offer limited runtime configurability - current implementations cannot dynamically adjust their processing elements while operating, restricting their ability to adapt to changing computational needs such as may be involved in switching between different types of audio processing tasks. These limitations may impact the efficiency and applicability of existing solutions for real-time audio and other sequential data processing on edge devices.

As such, further development to provide for improvements that address streaming data support and runtime configurability on resource-constrained devices is needed.

### SUMMARY

Disclosed herein is a hardware accelerator system for running Recurrent Neural Networks (RNNs) on edge computing devices like microcontrollers. The system uses two main components, namely a matrix multiplication accelerator that handles matrix multiplication operations, and an RNN scalar unit that performs the remaining calculations needed for RNN processing. The matrix multiplication accelerator can be implemented as either a convolution accelerator or an In-Memory Computing (IMC) based matrix multiplier. These components work together in a streaming fashion, processing data continuously as it arrives rather than waiting for complete batches.

The system organizes data using a matrix interleaving scheme that lets the RNN scalar unit process data efficiently without repeatedly accessing local memory. The data stream follows a schedule where each piece of information arrives exactly when it is needed for processing, which helps maintain continuous operation and avoid bottlenecks. A control system, configured through registers, manages this scheduling and can switch between different types of RNN operations, such as LSTM or GRU calculations, as well as support various general-purpose computation patterns when not executing RNN-specific operations.

The system supports both fixed-point and scale-offset quantization formats for calculations and can operate in a Single Instruction Multiple Data (SIMD) fashion, processing multiple data points simultaneously when the input stream provides packed vectors of data. This parallel processing ability, combined with the streaming design, makes the system effective for real-time processing of continuous data streams on resource-limited edge devices.

The scalar unit can perform multiple different general-purpose computational patterns beyond traditional RNN operations. The system can be configured both when it is first designed and while it is running, allowing it to be optimized for specific applications while remaining flexible during operation.

### BRIEF DESCRIPTION OF THE DRAWINGS

FIG. 1 diagrammatically depicts a known LSTM memory architecture showing how gates process the current input, previous hidden state, and cell state to produce updated states.
FIG. 2 is a block diagram of an RNN accelerator system disclosed herein.
FIG. 2A diagrammatically depicts a system level view of the Neural Processing Unit (NPU) instantiating the RNN accelerator of FIG. 2.
FIG. 3 depicts two equivalent formats for matrix multiplication in LSTM networks.
FIG. 4A depicts the basic GRU formulation showing how reset and update gates are computed.
FIG. 4B depicts a two-phase approach for GRU computation with dimensional layout.
FIG. 5 depicts the GRU design with linear before reset (LBR).
FIG. 6 is a block diagram of the recurrent scalar unit.
FIG. 7 is a block diagram of the six sequential processing stages of the datapath.
FIGS. 8A-8G show detailed implementations of each processing stage.

### DETAILED DESCRIPTION

The following disclosure enables a person skilled in the art to make and use the subject matter described herein. The general principles outlined in this disclosure can be applied to embodiments and applications other than those detailed above without departing from the spirit and scope of this disclosure. It is not intended to limit this disclosure to the embodiments shown, but to accord it the widest scope consistent with the principles and features disclosed or suggested herein.

The following detailed description describes a hardware accelerator system and how it processes Recurrent Neural Networks (RNNs) on edge devices through a streaming architecture that interleaves weight matrices and minimizes memory bottlenecks. By combining a matrix multiplication accelerator for matrix operations with an LSTM/GRU accelerator for scalar and gate computations, the system provides for continuous dataflow and reduces overhead. The matrix multiplication can be implemented using various approaches including Digital In-Memory Computing (DIMC), Analog In-Memory Computing, or a convolutional accelerator.

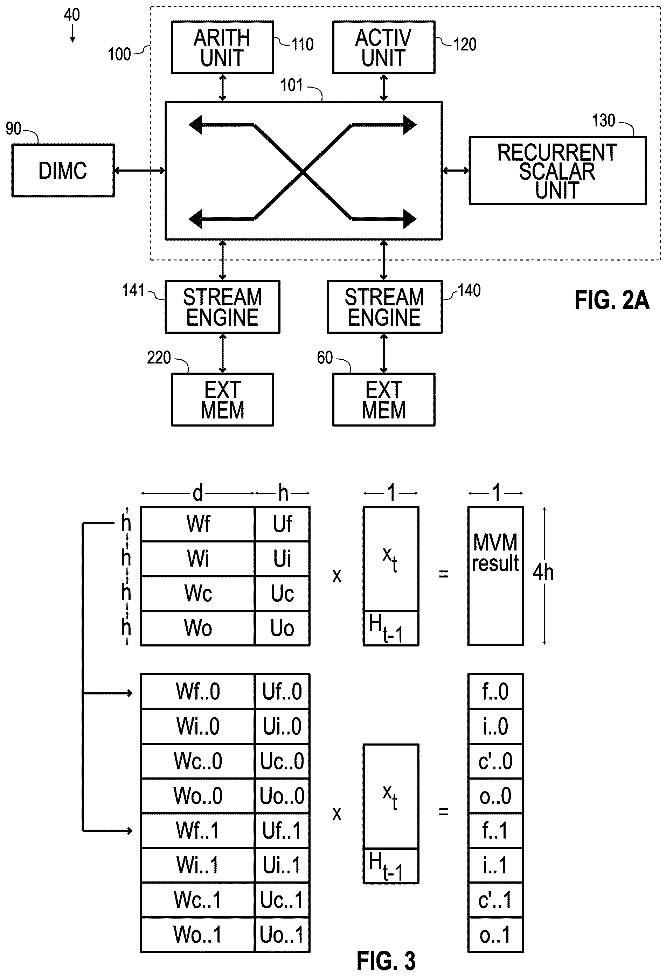

Referring to FIG. 2 in conjunction with the arrangement shown in FIG. 2A (and further shown in FIGS. 3-7), an RNN accelerator system 40 is now described. The system 40 receives incoming data through a direct memory access (DMA) module 50 and utilizes a dedicated memory 60 for storing model weights. A DMA module 70 sends these weights to the matrix multiplier accelerator 90 that performs most of the matrix multiplications needed for RNN operations. In some embodiments, an optional decompression block 80 may be included between DMA module 70 and the matrix multiplier accelerator 90, which is configurable to perform both lossless and lossy decompression. From the matrix multiplier accelerator 90, results are provided to an LSTM/GRU accelerator 100, which performs the remaining scalar operations - such as element-wise multiplications, additions, and activation functions. As will be described in greater detail hereinbelow, the accelerator 100 is configured to configure its computation flow at runtime for various RNN types using a streaming and interleaving scheme (see FIGS.3-6). Output data is then provided to a DMA module 230, while DMA modules 200 and 210 facilitate intermediate data movement to and from on-chip memory 220.

The matrix multiplier accelerator and accelerator 100 cooperate under a streaming dataflow (see FIG. 2A). More particularly, FIG. 2A illustrates the internal structure of the LSTM/GRU accelerator 100, showing how data from the matrix multiplier accelerator is provided to a switching matrix 101 and can be dispatched to arithmetic unit 110, activ unit 120, or a recurrent scalar unit 130 Stream engines 140 and 141 interface with the external memory 220 and feed data to or retrieve data from the switching matrix 101. These stream engines 140 and 141 cooperate with the DMA modules 200, 210, and 230 in FIG. 2 to maintain a continuous flow of data without extensive buffering.

Within accelerator 100, a local controller (not shown) reconfigures the datapath 160 to handle different RNN structures (e.g., LSTM or GRU) efficiently, including specific-purpose or general-purpose scalar operations. This minimizes memory and control overhead, making the system 40 particularly suitable for real-time, continuous data processing - such as audio streams - on edge computing devices.

Stream order sequencing optimization is implemented through the local controller, so that data elements arrive at the matrix multiplier accelerator and scalar units when needed for operations. This maintains continuous dataflow through the DMA modules 50, 70, 200, 210, and 230 while minimizing buffer requirements in the memory 220. The local controller utilizes minimal hardware components, such as two-to-one input multiplexers within the switching matrix 101, providing for efficient implementation of control schemes while maintaining minimal area impact. Through configuration registers, the local controller can modify the operation mode of accelerator 100 at runtime, changing the datapath configuration by controlling the multiplexers to create appropriate computing chains through the arithmetic unit 110, activ unit 120, and the recurrent scalar unit 130.

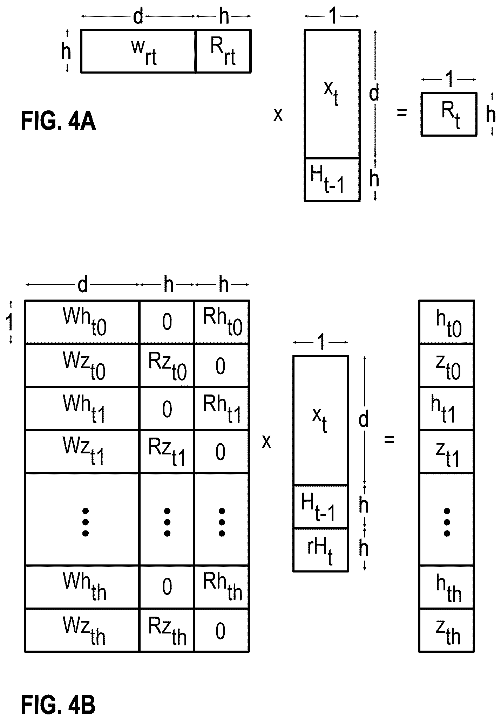

Referring to FIGS. 3 and 4 in conjunction with FIGS. 2 and 2A, the matrix-vector multiplication shown for LSTM networks is handled primarily by the matrix multiplier accelerator unit 90 (FIG. 2). In FIG. 2A, the output of matrix multiplier accelerator 90 is provided to the switching matrix 101, which passes the computed results to the appropriate processing units. As shown in FIGS. 3 and 4, the LSTM weight matrices Wf (forget gate), Wi (input gate), Wc (cell state), and Wo (output gate), along with their corresponding recurrent weight matrices (U matrices) are arranged in an interleaved format so that the matrix multiplier accelerator can compute all four gate operations in a single pass.

Mathematically, each gate value is calculated in two steps. The first step includes multiplying a combined input vector of {xₜ, hₜ₋₁} by the corresponding weight matrix plus a bias (where x₁ represents the current input, e.g., a word or audio sample, and hₜ₋₁ represents the previous hidden state). Second, the result is fed through either a sigmoid function (which constrains the output between 0 and 1) or a tanh function (which constrains the output between -1 and 1). These constraining functions, which may also be called non-linear functions, allow for identification of complex relationships in sequential data that go beyond simple proportional relationships.

More particularly, the forget gate fₜ determines what information to discard from the cell state by outputting values between 0 (forget) and 1 (keep): ${f}_{t} = σ \left(Wf\left[{x}_{t}; {h}_{{t}^{- 1}}\right]+bf\right) ,$

The input gate it controls what new information will be stored in the cell state by outputting values between 0 (ignore) and 1 (store): ${i}_{t} = σ \left(Wi\left[{x}_{t}; {h}_{{t}^{- 1}}\right]+bi\right) ,$

The candidate cell value cₜ' creates a vector of new candidate values that could be added to the cell state, transformed by tanh to be between -1 and 1: ${c}_{t} ′ = tanh \left(Wc\left[{x}_{t}; {h}_{{t}^{- 1}}\right]+bc\right) .$

These gate results feed into the recurrent scalar unit 130 (FIG. 2A), which combines them with the previous cell state cₜ₋₁ to produce the new cell state cₜ. The formula fₜ × cₜ₋₁ + iₜ × cₜ' shows how the forget gate controls what old information to keep and the input gate controls what new information to add: ${c}_{t} = {f}_{t} \times {c}_{{t}^{- 1}} + {i}_{t} \times {c}_{t} ′ .$

Finally, the output gate oₜ determines what parts of the cell state are exposed (e.g., sent to the hidden state output), again using values between 0 (output nothing) and 1 (output everything): ${o}_{t} = σ \left({W}_{o}\left[{x}_{t}; {h}_{{t}^{- 1}}\right]+{b}_{o}\right) ,$

The new hidden state hₜ is created by applying tanh to the cell state and multiplying by the output gate: ${h}_{t} = {o}_{t} \times tanh \left({c}_{t}\right) .$

The matrix multiplier accelerator 90 computes the four gates (forget, input, candidate, and output) using an interleaved matrix multiplication approach, shown in two different representations in FIGS. 3 and 4.

FIG. 3 shows two equivalent formats for the matrix multiplication. The top portion shows a compact matrix arrangement where "h" is the hidden state dimension and "d" is the input dimension. The left side contains weight matrices (Wf, Wi, Wc, Wo) for processing current input xₜ, while the right side contains recurrent matrices (Uf, Ui, Uc, Uo) for processing the previous hidden state hₜ₋₁. The bottom portion shows a different arrangement of these matrices with corresponding outputs from the matrix multiplication step labeled f.0, i.0, c'.0, o.0, f.1, i.1, c'.1, and o.1. This representation combines all the matrix multiplication operations in the LSTM state computation.

In both figures, the multiplication takes a concatenated input vector [xₜ; hₜ₋₁] of size (d + h) and produces an output containing all four gate values. By interleaving the matrices this way, all gates can be computed in a single matrix multiplication operation rather than four separate ones. This allows for a single memory fetch of weight data, immediate reuse of partial computations, parallel processing of all gates, and continuous data flow through the matrix multiplier accelerator hardware.

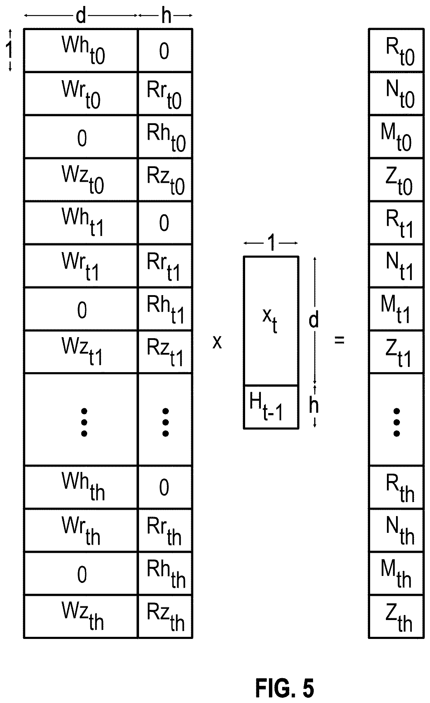

Turning to the gated recurrent unit (GRU) examples in FIGS. 4A, 4B, and 5, the same hardware blocks - matrix multiplier accelerator 90 in FIG. 2 (passing through switching matrix 101 in FIG. 2A) - perform the matrix multiplications for the GRU gates, while the recurrent scalar unit 130 carries out the nonlinearities and element-wise updates. In the basic GRU formulation (see FIG. 4A), two main gates, reset and update, are computed as: ${r}_{t} = σ \left({W}_{r}\left[{x}_{t}; {h}_{{t}^{- 1}}\right]+{b}_{r}\right)$ ${z}_{t} = σ \left(Wz\left[{x}_{t}; {h}_{{t}^{- 1}}\right]+bz\right) .$

The partially updated hidden state is then: ${h}_{t} ′ = tanh \left({W}_{h}\left[{x}_{t}; \left({r}_{t}\times {h}_{{t}^{- 1}}\right)\right]+{b}_{h}\right)$

The final output is: ${h}_{t} = \left(1-{z}_{t}\right) \times {h}_{t} ′ + {z}_{t} \times {h}_{{t}^{- 1}} .$

In FIG. 4B, a two-phase approach is illustrated, where the dimensional layout includes some positions filled with zeros or split gate parameters, allowing multiple gates to be computed within one pass of the matrix multiplier accelerator 90. The recurrent scalar unit 130 again applies sigmoid and tanh functions element-wise, combining partial results as they are streamed out of the matrix multiplier.

FIG. 5 extends the GRU design to LinearBeforeReset by introducing an additional linear transformation prior to applying the reset gate. Mathematically, part of the hidden state update is computed without the reset gate in the multiplication path, then folded into the gate logic afterward. The weight matrices Wₕ, Wᵣ, Rₕ, Rᵣ, and related biases or zeros are again handled in an interleaved manner so that the matrix multiplier accelerator 90 produces multiple gate signals in the same pass. The local controller within accelerator 100 (see FIG. 2A) coordinates which portions of each matrix or bias vector should be streamed into the matrix multiplier accelerator 90 at any given time, ensuring that the resulting outputs arrive just in time at the recurrent scalar unit 130 for further element-wise operations.

The system also supports simplified RNN variants such as minGRU, which is a minimal version of GRU that reduces computational complexity while maintaining performance. The minGRU formulation simplifies the standard GRU by removing the reset gate mechanism's dependency on the previous hidden state and replacing the tanh activation with a linear transformation for the candidate hidden state.

Mathematically, minGRU computes: ${h}_{t} = \left(1-{z}_{t}\right) ⊙ {h}_{t - 1} + {z}_{t} ⊙ {{h}^{˜}}_{t}$ ${z}_{t} = σ \left({Linear}_{{d}_{h}}\left({x}_{t}\right)\right)$ ${{h}_{t}}^{˜} = {Linear}_{{d}_{h}} \left({x}_{t}\right)$

This formulation requires significantly fewer parameters O(2dₕdₓ) vs O(3dₕ(dₓ + dₕ)) for standard GRU, where dₓ and dₕ are the dimensions of the input and hidden state respectively. The reconfigurable architecture of the RNN accelerator system enables efficient implementation of this simpler structure through appropriate datapath configuration and control signal routing. Further details may be found in the paper entitled Were RNNs All We Needed, by Feng et al., arXiv:2410.01201v3 [cs.LG], November 28, 2024, the contents of which are incorporated by reference in their entirety. The system also supports simplified RNN variants such as minGRU and minLSTM, which are minimal versions of GRU and LSTM that reduce computational complexity while maintaining performance. The minGRU formulation simplifies the standard GRU by removing the reset gate mechanism's dependency on the previous hidden state and replacing the tanh activation with a linear transformation for the candidate hidden state.

In FIGS. 3-6, the combined hardware of matrix multiplier accelerator 90 and the switching fabric 101 (FIG. 2A) handles the matrix multiplication of each gate. The results are then forwarded to the recurrent scalar unit 130, which applies the required nonlinearities and gating formulas. By storing and retrieving the weight parameters in an interleaved format, the need for four or more separate load-compute-store cycles per time step is eliminated, thereby lowering memory overhead and improving throughput for edge computing devices. This allows the accelerator 100 to adapt quickly between LSTM and GRU modes under streaming conditions, making it particularly useful for real-time applications on constrained edge devices.

Beyond the RNN operations described above, the system 40 may implement additional features that enhance its flexibility and practical utility. Within accelerator 100, each processing unit of the recurrent scalar unit 130 supports both fixed-point and scale-offset quantization formats, providing for configurable precision handling for different applications, for example, using reduced precision for energy-efficient inference on edge devices while maintaining higher precision for training operations. The arithmetic unit 110 and activ unit 120 support these formats, allowing the system 40 to balance computational precision against hardware resource utilization based on application requirements. For example, audio processing applications can use fixed-point formats for faster real-time processing, while natural language processing tasks can use scale-offset quantization for better accuracy. The switching matrix 101 and local controller enable the recurrent scalar unit 130 to be configured for general-purpose computation patterns beyond traditional RNN operations.

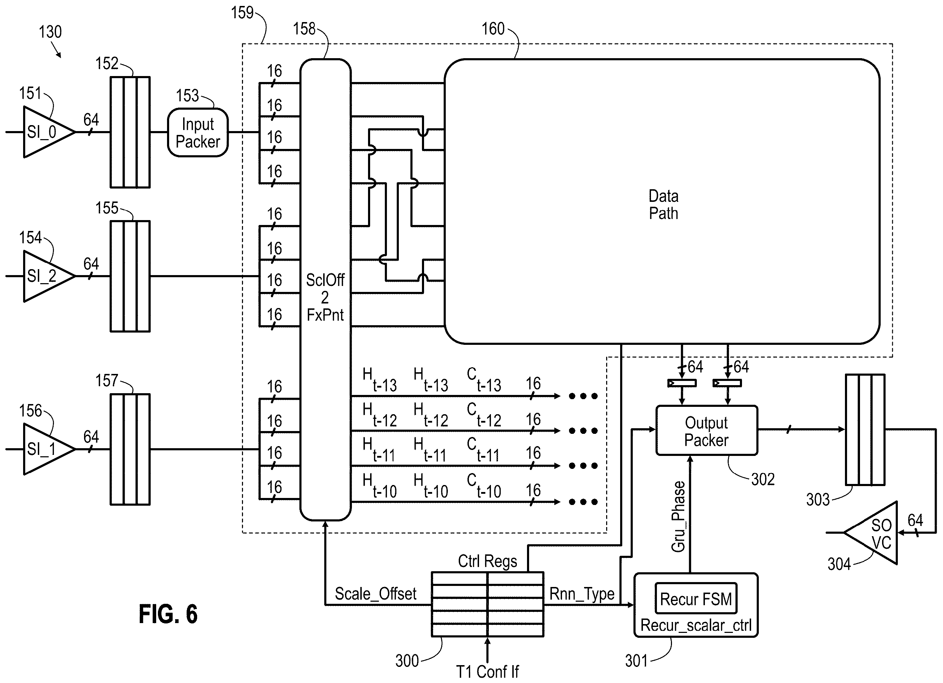

Referring to FIG. 6, a detailed block diagram of the recurrent scalar unit 130 within the LSTM/GRU accelerator 100 is shown. The unit receives input data through three stream interfaces: SI_0 (reference 151), SI_2 (reference 154), and SI_1 (reference 156), each having 64-bit wide data paths and associated buffering elements 152, 155, and 157. An input packer 153 processes data from the first stream interface 151.

The core processing section 159 includes a configurable datapath 160 preceded by an input stage 158 (which includes multiple 16-bit wide data paths arranged in parallel). The input stage includes configuration settings for scale-offset quantization (SclOff) and fixed-point arithmetic (FxPnt) processing modes. The datapath maintains sets of state information (Hₜ₋₁₃, Hₜ₋₁₂, Hₜ₋₁₁, Hₜ₋₁₀) along with their corresponding recurrent values (rHₜ₋₁₃, rHₜ₋₁₂, rHₜ₋₁₁, rHₜ₋₁₀) and cell states (Cₜ₋₁₃, Cₜ₋₁₂, Cₜ₋₁₁, Cₜ₋₁₀), each managed through 16-bit wide interfaces.

The datapath input mapping is organized through three stream links that coordinate data flow for different RNN configurations. Stream_link0 handles primary inputs in₀-in₃, which map to different gate computations depending on the RNN type. For LSTM, these represent forget (f), input (i), candidate cell (c'), and output (o) gates. For GRU Phase 1, these become reset gates r₀-r₃; for GRU Phase 2, they represent ho, zo, h₁, z₁; and for GRU with linear before reset, they map to rₜ, zₜ, mt, nt. Stream_link1 manages state inputs in₄-in₇, handling previous cell and hidden states. Stream_link2 processes inputs in₈-in₁₁, managing weight and bias terms specific to each RNN type.

The datapath implements different mappings depending on the RNN mode. For LSTM operations, the unit applies sigmoid to (Ft + BIASFₜ), (It + BIASIₜ), and (Ot + BIASOₜ), applies tanh to (Cₜ' + BIASCₜ), computes the new cell state as Cₜ = Fₜ × Cₜ₋₁ + Iₜ × Cₜ', and computes the hidden state as Hₜ = Oₜ × tanhCₜ.

For GRU with LinearBeforeReset = 0 (standard GRU mode), the datapath computes $\begin{matrix}{rH}_{t} = sigmoid \left({r}_{{t}_{0}}+{BIAS}_{{r}_{{t}_{0}}}\right) ∗ {H}_{t - {1}_{0}} , sigmoid \left({r}_{{t}_{1}}+{BIAS}_{{r}_{{t}_{1}}}\right) ∗ {H}_{t - {1}_{1}} , \\ sigmoid \left({r}_{{t}_{2}}+{BIAS}_{{r}_{{t}_{2}}}\right) ∗ {H}_{t - {1}_{2}} , sigmoid \left({r}_{{t}_{3}}+{BIAS}_{{r}_{{t}_{3}}}\right) ∗ {H}_{t - {1}_{3}}\end{matrix}$ ${H}_{t} = \left\{{H}_{{t}_{0}}, {H}_{{t}_{1}}\right\}$

As an example ${H}_{{t}_{0}} = \left({Z}_{{t}_{0}}∗{H}_{t - {1}_{0}}\right) - \left({Z}_{{t}_{0}}∗{h}_{{t}_{0}}\right) + \left({h}_{{t}_{0}}∗1\right)$ ${H}_{{t}_{1}} = \left({Z}_{{t}_{1}}∗{H}_{t - {1}_{1}}\right) - \left({Z}_{{t}_{1}}∗{h}_{{t}_{1}}\right) + \left({h}_{{t}_{1}}∗1\right)$

For GRU with LinearBeforeReset = 1, the datapath computes hₜ = tanh(Rₜ × Nₜ + Mₜ × 1) and Hₜ = hₜ + Zₜ × (Hₜ-1 - ht), where linear transformations are performed prior to applying reset gates.

The recurrent scalar unit also supports four general-purpose computational patterns as follows:
1. m = f(f(a + BIASₐ) × f(b + BIAS_{b}) +/- f(c + BIAS_{c}) × f(d + BIAS_{d})), where Stage 1 handles the bias additions and activations, Stage 2 performs the multiplications, and Stage 3 combines the products, and where f can be tanh, sigmoid, other activation functions such as ReLU, or pass-through (e.g., f(x) = x). Additionally, the following operations can be performed on the result m:
   y = m × f(k + BIASₖ), where Stage 4 activation is applied to (k + BIASₖ) and Stage 5 performs the multiplication with m;
   y = e - m, where Stage 4 performs the subtraction with e being a datapath input; and
   z = m + h × (q - m), where Stage 4 handles the subtraction (q - m) with m passed through, Stage 5 performs the multiplication h × (q - m), and Stage 6 adds this product to m to produce the final result.
2. y = {y₁, y₂, y₃, y₄}, where yᵢ = f(aᵢ + BIASₐᵢ) × bᵢ where f can be tanh, sigmoid, other activation functions such as ReLU, or pass-through. This pattern uses Stage 1 for bias addition and activation, followed by Stage 2 for multiplication, with bᵢ values coming from any datapath input.
3. y = (f(a + BIASₐ) × b) ± (f(a + BIASₐ) × f(c + BIAS_{c})) + f(c + BIAS_{c}) where f can be tanh, sigmoid, other activation functions such as ReLU, or pass-through. This computation utilizes Stage 1 for bias addition and activation, Stage 2 for multiplication, Stage 3 for the initial combination of products, and Stage 4 for the final addition.
4. y = {y₁, y₂} where y₁ = f(a₁ × b₁ ± a₂ × b₂) and y₂ = f(a₃ × b₃ ± a₄ × b₄) where f can be tanh, sigmoid, other activation functions such as ReLU, or pass-through. This pattern bypasses Stage 1, beginning at Stage 2 for multiplication, continuing to Stage 3 for summation, and finishing at Stage 4 for activation. The datapath's flexibility allows for configuration of additional computational patterns beyond these representative examples through appropriate routing and control signal settings.

Each processing unit in the datapath supports both fixed-point and scale-offset quantization formats through a structure comprising input shift registers, arithmetic logic, a requantization block, and an output shift register. The requantization can be enabled or disabled via the scale_offset_en control signal.

Control and configuration of the unit is managed through control registers 300 that include Scale_Offset parameters and RNN _Type settings, accessible through a configuration interface. A recurrent finite state machine 301 implements the control logic, reference (recur_scalar_ctrl), which manages the processing flow based on the configured RNN type and operating mode.

An output packer 302 processes the computed hidden states Hₜ, recurrent hidden states rHₜ, and cell states Cₜ into 64-bit outputs. The final output interface 303 provides the packed data to the next processing stage.

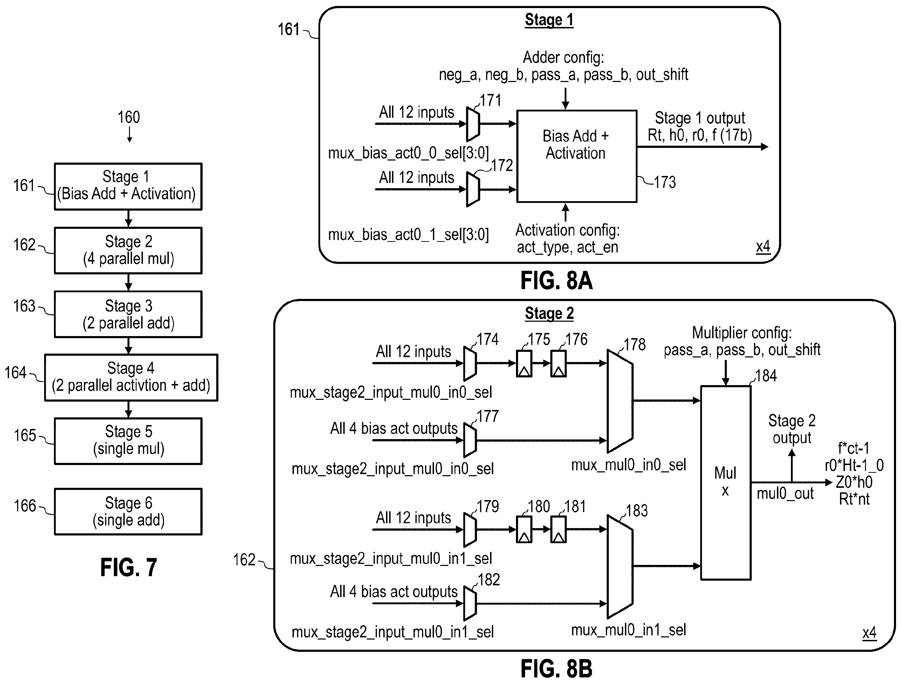

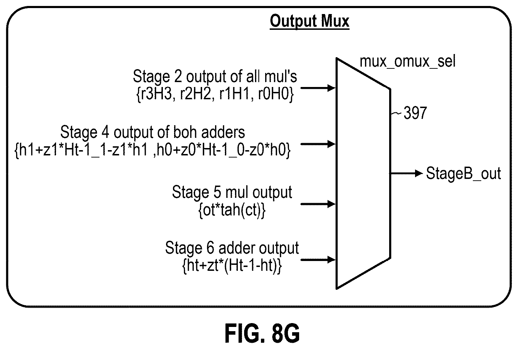

Referring now to FIG. 7, the datapath 160 is illustrated as having six sequential processing stages 161, 162, 163, 164, 165, and 166, followed by an output multiplexer (see FIG. 8G). These stages receive inputs from the input stage 158 and are configurable for different RNN operations such as LSTM, GRU, linear-before-reset GRU, or other scalar computations.

In particular, FIG. 8A shows Stage 1 (reference 161), which performs a bias-add-plus-activation operation. Multiplexers 171 and 172 select up to twelve possible inputs, each of which may be negated or passed through based on configuration signals (neg_a, neg_b, pass_a, pass_b). A bias add and activation block 173 then applies a user-selectable activation function (e.g., sigmoid, tanh, or pass-through) before producing one or more outputs (e.g., gate values r₀, r₁, fₜ, h₀).

Turning to FIG. 8B, Stage 2 (reference 162) and includes four parallel multipliers 184 each receiving its operands from multiplexers 174-183. These multiplexers 184 can be configured to pass outputs from Stage 1 (reference numeral 161). A multiplier configuration (pass_a, pass_b, out_shift) controls how each product is scaled or shifted. Typical usage includes computing partial products such as fₜ × cₜ₋₁ in an LSTM or rₜ × hₜ₋₁ in a GRU.

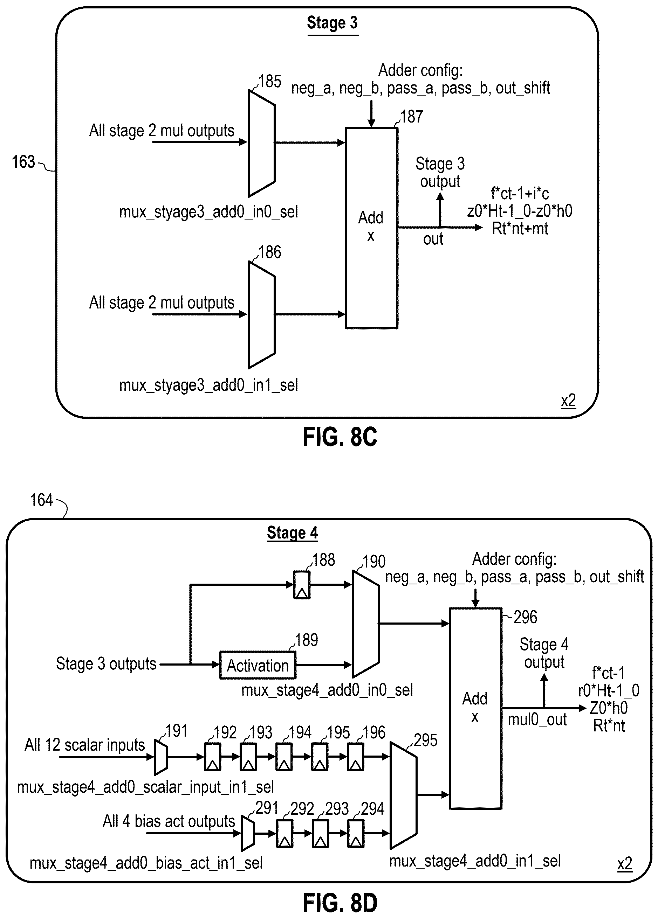

Next, FIG. 8C shows Stage 3 (reference 163), which provides two parallel adders 187. Multiplexers 185 and 186 select among the Stage 2 multiplier outputs or other potential signals. The adder block 187 can be configured for addition, subtraction, or pass-through (neg_a, neg_b, pass_a, pass_b), with an optional output shift. In an LSTM context, for example, these adders may combine partial products to form the new cell state, e.g. cₜ = (fₜ × cₜ₋₁) + (iₜ × cₜ'). In a GRU context, the adders can handle partial sums for the update equation, for instance combining zt × hₜ₋₁ with (1-zₜ) × hₜ', or computing intermediate results such as rₜ × hₜ₋₁ prior to additional stages. This configurability allows Stage 3 to adapt to a variety of RNN gate formulas using the same underlying hardware resources.

As shown in FIG. 8D, Stage 4 (reference 164) provides two parallel data paths. Each path receives outputs from Stage 3 (reference 163) and passes them through an activation block 189 (e.g., sigmoid, tanh, or pass-through). The resulting activated signals can then be combined with scalar inputs 191-196 or bias outputs 291-294 via a multiplexer 295. The adder 296 forms the final output of each parallel path. This configuration allows the system to produce final gate values, apply additional gating logic, or combine partial results from earlier stages.

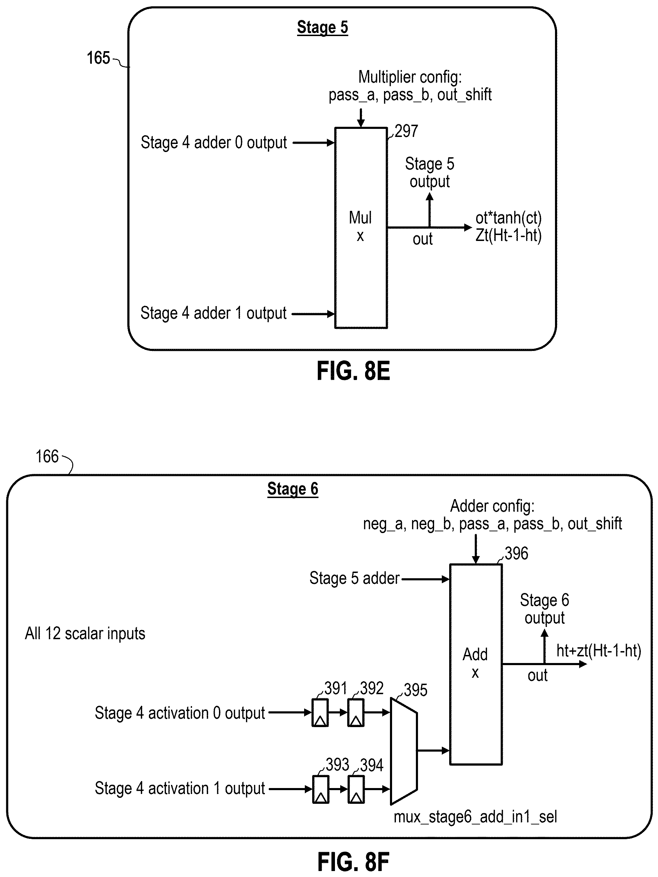

Referring now to FIG. 8E, Stage 5 (reference 165) comprises a single multiplier 297. Its two inputs come from the outputs of Stage 4 (i.e., the two parallel adders/activation paths). Configuration bits (pass_a, pass_b, out_shift) control whether the operands are directly multiplied, negated, or shifted. In an LSTM, this multiplier may compute hₜ = oₜ × tanh(cₜ). In a GRU, it can implement zₜ × (hₜ₋₁ - hₜ) or other single-multiplication expressions.

Turning to FIG. 8F, Stage 6 is labeled 166 and includes a final adder 396. The multiplier output of Stage 5 (reference numeral 165) is one adder input, while the other input is selected by multiplexers 391-395. These multiplexers may choose among activation outputs from Stage 4 or other scalar values. The adder 396 (configurable via neg_a, neg_b, pass_a, pass_b, out_shift) yields the final datapath output for certain RNN equations - such as a GRU final update hₜ = h^{t} + zₜ × (hₜ₋₁ - hₜ).

FIG. 8G illustrates the output multiplexer 397, which allows partial or final outputs from each stage to be passed as StageB_out. In particular, the Stage 2 multiplier outputs, Stage 4 adder results, Stage 5 multiplier result, or Stage 6 adder output can be routed out of datapath 160 according to mux_omux_sel. This allows intermediate gates (rt, zt, etc.) or final hidden/cell states (ht, cₜ, etc.) to be made available for storage, debugging, or further processing within the accelerator.

Referring now to FIGS. 8A-8G, each processing unit of the scalar unit (e.g., within accelerator 100) supports both fixed-point and scale-offset quantization formats. The system includes a fixed-point to scale-offset converter that is dynamically triggered by the local controller at specific timesteps. This conversion block functions as a specialized quantization pipeline that multiplies the fixed-point result with a configurable scale factor, followed by adding an offset value. A right shift operation is then applied after the addition, followed by rounding and saturation to 8-bit precision to produce the final result in scale/offset format. Although not separately illustrated, this conversion functionality is integrated within the processing stages described hereinabove. This approach enables the system to maintain higher precision during intermediate calculations using fixed-point arithmetic, while providing outputs in a scale/offset representation that may be more efficient for subsequent processing stages or memory storage. By controlling when this conversion occurs through the local controller, the system can optimize for both computational accuracy and resource efficiency depending on the specific RNN operation being executed.

Various advantages of the system described hereinabove should be apparent to those of skill in the art, particularly when considering the combination of the matrix multiplier accelerator 90 (FIG. 2), the LSTM/GRU accelerator 100 (FIG. 2A), and the scalar datapath described in FIGS. 8A-8G. First, the system has the capability to process streaming data, thereby supporting continuous real-time workloads without incurring large memory overheads, such as is useful in edge computing devices. Second, by interleaving matrix multiplication tasks and sequencing the associated scalar operations, the system significantly reduces memory accesses, minimizing data movement in and out of the scalar datapath. This also reduces pressure on the stream switch that routes data routing among the matrix multiplier accelerator, on-chip buffers, and output interfaces. Third, the hardware is area-efficient, since it dedicates specialized units (e.g., the scalar datapath 160) rather than reusing large, general-purpose blocks. Fourth, the system is reconfigurable at run time to accommodate different RNN topologies, such as LSTM, GRU, or LinearBeforeReset variants, and can also support general-purpose computational patterns. Finally, at design time, the datapath and its associated hardware parameters can be tuned for performance, power, and area (PPA) tradeoffs, providing flexibility for various edge computing applications.

Finally, it is evident that modifications and variations can be made to what has been described and illustrated herein without departing from the scope of this disclosure.

Although this disclosure has been described with a limited number of embodiments, those skilled in the art, having the benefit of this disclosure, can envision other embodiments that do not deviate from the disclosed scope. Furthermore, skilled persons can envision embodiments that represent various combinations of the embodiments disclosed herein made in various ways.

Example embodiments of the present disclosure are summarized here. Other embodiments can also be understood from the entirety of the specification and the examples.

Example 1 : A method of performing recurrent neural network (RNN) calculations in a streaming dataflow architecture, the method comprising:
- receiving input data streams corresponding to a current input and at least one previous hidden state from one or more direct memory access (DMA) modules;
- forwarding the input data streams to a matrix multiplication unit configured to generate intermediate results for a plurality of RNN gates;
- streaming the intermediate results from the matrix multiplication unit directly to a scalar unit, wherein the scalar unit is configured to execute element-wise gate operations for the RNN; and
- outputting updated hidden states based on the element-wise gate operations,
wherein the scalar unit and the matrix multiplication unit operate in a continuous streaming manner.

Example 2 : The method of example 1, further comprising:
- interleaving a plurality of weight matrices for different ones of the plurality of RNN gates into a single combined matrix multiplication pass; and
- generating, from the single pass of matrix multiplication, respective output values corresponding to each RNN gate, wherein the interleaving enables the scalar unit to begin processing the output of at least one RNN gate as soon as the partial result of that RNN gate is available, without waiting for completion of other gates.

Example 3 : The method of example 1 or 2, further comprising:
- configuring, during runtime, a local controller associated with the scalar unit, such that the local controller modifies an internal data path of the scalar unit to implement at least one of long short-term memory (LSTM) operations, gated recurrent unit (GRU) operations, minimal gated recurrent unit (minGRU) operations, or linear-before-reset GRU operations.

Example 4 : The method of example 3, wherein configuring the local controller comprises setting control signals for multiplexers that determine data routing between processing stages within the scalar unit.

Example 5 : The method of any of examples 1 to 4, further comprising:
- bypassing a requantization stage when fixed-point precision is required, and enabling the requantization stage when scale-offset quantization is to be performed, wherein the requantization stage is controlled by the local controller at runtime.

Example 6 : The method of any of examples 1 to 5, further comprising:
- performing, in a first processing stage, bias addition and activation functions;
- performing, in a second processing stage, element-wise multiplication of the activation outputs;
- performing, in a third processing stage, addition or subtraction of multiplication results;
- applying, in a fourth processing stage, additional activation functions to combined results;
- performing, in a fifth processing stage, further multiplication operations on the activated results; and
- combining, in a sixth processing stage, results from the fifth processing stage with selected outputs from previous stages.

Example 7 : The method of example 6, further comprising:
- selectively outputting intermediate results from any of the six sequential processing stages via an output multiplexer, wherein different RNN operations utilize different combinations of the processing stages.

Example 8 : The method of any of examples 1 to 7, further comprising:
- configuring the scalar unit to execute at least one of multiple general-purpose computational patterns when no RNN operation is being executed, wherein the configuring comprises selecting different combinations of processing stages to implement the different computational patterns.

Example 9 : The method of any of examples 1 to 8, further comprising:
- converting fixed-point results to scale-offset quantization format at specific timesteps by multiplying by a scale factor, adding an offset, applying a right shift, and performing rounding and saturation to 8-bit precision.

Example 10 : The method of any of examples 1 to 9, wherein the streaming dataflow architecture minimizes buffer requirements by coordinating arrival of data elements at the matrix multiplication unit and scalar unit when needed for operations.

Example 11 : The method of any of examples 1 to 10, further comprising:
- decompressing weight matrices using a decompression block positioned between a DMA module and the matrix multiplication unit, wherein the decompression block supports both lossless and lossy decompression methods.

Example 12 : A recurrent neural network (RNN) accelerator system, comprising:
- a matrix multiplication unit configured to process interleaved weight matrices for a plurality of RNN gates;

- a scalar unit coupled to the matrix multiplication unit and configured to perform element-wise operations on intermediate results received from the matrix multiplication unit;
- a plurality of direct memory access (DMA) modules configured to stream input data to the matrix multiplication unit and to stream output data from the scalar unit; and
- a local controller configured to dynamically reconfigure a datapath of the scalar unit at runtime;
- wherein the matrix multiplication unit and the scalar unit are arranged in a streaming dataflow architecture that enables continuous processing of RNN operations.

Example 13 : The system of example 12, wherein the scalar unit comprises:
- an arithmetic unit;
- an activation unit; and
- a recurrent scalar unit configured to implement gate operations for LSTM and GRU neural networks.

Example 14 : The system of example 13, wherein the recurrent scalar unit comprises:
- a plurality of stream interfaces configured to receive input data;
- a configurable datapath comprising six sequential processing stages; and
- an output packer configured to process computed hidden states and cell states into packed outputs.

Example 15 : The system of example 14, wherein the six sequential processing stages comprise:
- a first stage configured to perform bias addition and activation functions;
- a second stage configured to perform element-wise multiplication;
- a third stage configured to perform addition or subtraction of multiplication results;
- a fourth stage configured to apply additional activation functions;
- a fifth stage configured to perform further multiplication operations; and
- a sixth stage configured to combine results from previous stages.

Example 16 : The system of example 15, further comprising:
- an output multiplexer coupled to outputs of each of the six sequential processing stages and configured to selectively route intermediate or final results from any processing stage to an output of the recurrent scalar unit.

Example 17 : The system of any of examples 12 to 16, further comprising:
- a fixed-point to scale-offset converter configured to convert fixed-point computation results to scale-offset quantization format at specific timesteps determined by the local controller.

Example 18 : The system of any of examples 12 to 17, further comprising:
- a decompression block positioned between one of the DMA modules and the matrix multiplication unit, the decompression block configured to perform lossless and lossy decompression of weight matrices.

Example 19 : The system of any of examples 12 to 17, wherein the local controller is configured to:
- select, at runtime, between LSTM operations, GRU operations, minimal gated recurrent unit (minGRU) operations, and linear-before-reset GRU operations; and
- configure the datapath of the scalar unit to implement one of multiple general-purpose computational patterns when no RNN operation is being executed.

Example 20 : The system of any of examples 12 to 19, wherein:
- the matrix multiplication unit is configured to interleave a plurality of weight matrices for different RNN gates into a single combined matrix multiplication pass; and
- the system is configured to stream partial results for individual gates to the scalar unit as soon as they are available, without waiting for completion of matrix multiplication for all gates.

## Claims

1. A method of performing recurrent neural network (RNN) calculations in a streaming dataflow architecture, the method comprising:
- receiving input data streams corresponding to a current input and at least one previous hidden state from one or more direct memory access (DMA) modules;
- forwarding the input data streams to a matrix multiplication unit configured to generate intermediate results for a plurality of RNN gates;
- streaming the intermediate results from the matrix multiplication unit directly to a scalar unit, wherein the scalar unit is configured to execute element-wise gate operations for the RNN; and
- outputting updated hidden states based on the element-wise gate operations,
wherein the scalar unit and the matrix multiplication unit operate in a continuous streaming manner.

2. The method of claim 1, further comprising:
- interleaving a plurality of weight matrices for different ones of the plurality of RNN gates into a single combined matrix multiplication pass; and
- generating, from the single pass of matrix multiplication, respective output values corresponding to each RNN gate, wherein the interleaving enables the scalar unit to begin processing the output of at least one RNN gate as soon as the partial result of that RNN gate is available, without waiting for completion of other gates.

3. The method of claim 1 or 2, further comprising:
- configuring, during runtime, a local controller associated with the scalar unit, such that the local controller modifies an internal data path of the scalar unit to implement at least one of long short-term memory (LSTM) operations, gated recurrent unit (GRU) operations, minimal gated recurrent unit (minGRU) operations, or linear-before-reset GRU operations, and for example,
wherein configuring the local controller comprises setting control signals for multiplexers that determine data routing between processing stages within the scalar unit.

4. The method of any of claims 1 to 3, further comprising:
- bypassing a requantization stage when fixed-point precision is required, and enabling the requantization stage when scale-offset quantization is to be performed, wherein the requantization stage is controlled by the local controller at runtime.

5. The method of claim 1, further comprising:
- performing, in a first processing stage, bias addition and activation functions;
- performing, in a second processing stage, element-wise multiplication of the activation outputs;
- performing, in a third processing stage, addition or subtraction of multiplication results;
- applying, in a fourth processing stage, additional activation functions to combined results;
- performing, in a fifth processing stage, further multiplication operations on the activated results; and
- combining, in a sixth processing stage, results from the fifth processing stage with selected outputs from previous stages,
and for example,
the method further comprises:
- selectively outputting intermediate results from any of the six sequential processing stages via an output multiplexer, wherein different RNN operations utilize different combinations of the processing stages.

6. The method of any of claims 1 to 5, further comprising:
- configuring the scalar unit to execute at least one of multiple general-purpose computational patterns when no RNN operation is being executed, wherein the configuring comprises selecting different combinations of processing stages to implement the different computational patterns.

7. The method of any of claims 1 to 6, further comprising:
- converting fixed-point results to scale-offset quantization format at specific timesteps by multiplying by a scale factor, adding an offset, applying a right shift, and performing rounding and saturation to 8-bit precision.

8. The method of any of claims 1 to 7, wherein the streaming dataflow architecture minimizes buffer requirements by coordinating arrival of data elements at the matrix multiplication unit and scalar unit when needed for operations.

9. The method of any of claims 1 to 8, further comprising:
- decompressing weight matrices using a decompression block positioned between a DMA module and the matrix multiplication unit, wherein the decompression block supports both lossless and lossy decompression methods.

10. A recurrent neural network (RNN) accelerator system, comprising:
- a matrix multiplication unit configured to process interleaved weight matrices for a plurality of RNN gates;
- a scalar unit coupled to the matrix multiplication unit and configured to perform element-wise operations on intermediate results received from the matrix multiplication unit;
- a plurality of direct memory access (DMA) modules configured to stream input data to the matrix multiplication unit and to stream output data from the scalar unit; and
- a local controller configured to dynamically reconfigure a datapath of the scalar unit at runtime;
- wherein the matrix multiplication unit and the scalar unit are arranged in a streaming dataflow architecture that enables continuous processing of RNN operations.

11. The system of claim 10, wherein the scalar unit comprises:
- an arithmetic unit;
- an activation unit; and
- a recurrent scalar unit configured to implement gate operations for LSTM and GRU neural networks,
and for example
wherein the recurrent scalar unit comprises:
- a plurality of stream interfaces configured to receive input data;
- a configurable datapath comprising six sequential processing stages; and
- an output packer configured to process computed hidden states and cell states into packed outputs,
and for example
wherein the six sequential processing stages comprise:
- a first stage configured to perform bias addition and activation functions;
- a second stage configured to perform element-wise multiplication;
- a third stage configured to perform addition or subtraction of multiplication results;
- a fourth stage configured to apply additional activation functions;
- a fifth stage configured to perform further multiplication operations; and
- a sixth stage configured to combine results from previous stages,
and for example,
the system further comprises:
- an output multiplexer coupled to outputs of each of the six sequential processing stages and configured to selectively route intermediate or final results from any processing stage to an output of the recurrent scalar unit.

12. The system of claim 10 or 11, further comprising:
- a fixed-point to scale-offset converter configured to convert fixed-point computation results to scale-offset quantization format at specific timesteps determined by the local controller.

13. The system of any of claims 10 to 12, further comprising:
- a decompression block positioned between one of the DMA modules and the matrix multiplication unit, the decompression block configured to perform lossless and lossy decompression of weight matrices.

14. The system of any of claims 10 to 13, wherein the local controller is configured to:
- select, at runtime, between LSTM operations, GRU operations, minimal gated recurrent unit (minGRU) operations, and linear-before-reset GRU operations; and
- configure the datapath of the scalar unit to implement one of multiple general-purpose computational patterns when no RNN operation is being executed.

15. The system of any of claims 10 to 14, wherein:
- the matrix multiplication unit is configured to interleave a plurality of weight matrices for different RNN gates into a single combined matrix multiplication pass; and
- the system is configured to stream partial results for individual gates to the scalar unit as soon as they are available, without waiting for completion of matrix multiplication for all gates.
